# EUROPÄISCHE PATENTSCHRIFT

(11) **EP 2 495 089 B1**
(45) Veröffentlichungstag und Bekanntmachung des Hinweises auf die Patenterteilung: **31.12.2014**
(21) Anmeldenummer: 12158115.1
(22) Anmeldetag: 05.03.2012
(51) Int. Cl.: B29C 49/46

(54) **Blasformmaschine mit beheiztem Sterilraum sowie Verfahren**
Blow moulding device with heated sterile area and process
Machine de formage par soufflage dotée d'une chambre stérile chauffée et procédé

(30) Priorität: 04.03.2011 DE 102011013121
(43) Veröffentlichungstag der Anmeldung: 05.09.2012
(73) Patentinhaber: Krones AG, 93073 Neutraubling (DE)
(72) Erfinder: Neubauer, Michael, 83236 Übersee (DE); Söllner, Jürgen, 93176 Beratzhausen (DE)
(74) Vertreter: Bittner, Bernhard

(56) Entgegenhaltungen:
- EP-A1- 2 388 129
- EP-A1- 2 431 058
- WO-A2-2010/020529

## Beschreibung

Die vorliegende Erfindung bezieht sich auf eine Vorrichtung zum Umformen von Kunststoffvorformlingen zu Kunststoffbehältnissen sowie ein Verfahren zum Umformen von Kunststoffvorformlingen zu Kunststoffbehältnissen. Derartige Vorrichtungen und Verfahren sind aus dem Stand der Technik seit langem bekannt. Bei bestimmten Anwendungen Ist es dabei erforderlich, die Kunststoffvorformlinge unter aseptischen Bedingungen zu Kunststoffbehältnissen umzuformen. In einigen Ländern werden für derartige aseptische Behandlungen Richtlinien aufgestellt. So werden beispielsweise in den USA derartige Richtlinien seitens der FDA (Food and Drug Administration) aufgestellt und überwacht.

Zu diesem Zweck werden die Kunststoffvorformlinge innerhalb eines Reinraums transportiert und während dieses Transports zu Kunststoffbehältnissen umgeformt. Im Einzelnen werden die Kunststoffvorformlinge dabei innerhalb von Blasformen transportiert und in diesen Blasformen durch Beaufschlagung mit gasförmigem Medium und insbesondere mit Blasluft umgeformt. Aus der WO 2010 020 529 A2 ist eine derartige aseptische Blasmaschine bekannt. Diese besteht unter anderem aus einem Reinraum, in dem die Blasstationen bzw. Umformungsstationen angeordnet sind. Vergleiche dazu den Oberbegriff der Ansprüche 1 und 8.

Um eine Reinraumatmosphäre herzustellen, ist unter anderem eine Sterilisation des Innenraums, d. h. dieses Reinraums (der auch als Isolator bezeichnet wird) nötig. Dies wird dabei üblicherweise mit Hilfe von gasförmigem H₂O₂ (Wasserstoffperoxid) oder ggfs. auch Peressigsäure durchgeführt. Dabei kann es jedoch zu einem unerwünschten Kondensieren des H₂O₂ an Bereichen des Reinraums, insbesondere an Isolatorwänden und eingebauten Bauteilen, wie beispielsweise den Formträgern, kommen.

Der vorliegenden Erfindung liegt die Aufgabe zugrunde, eine Blasformmaschine zur Verfügung zu stellen, welche eine verbesserte Sterilisierung des Reinraums erlaubt. Dies wird erfindungsgemäß durch den Gegenstand der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Vielzahl von Umformungsstationen auf, welche an einem beweglichen Träger angeordnet sind, wobei die Umformungsstationen jeweils in Blasformträgern angeordnete Blasformen aufweisen, welche zur Aufnahme der Kunststoffvorformlinge dienen und innerhalb derer die Kunststoffvorformlinge zu den Kunststoffbehältnissen umformbar sind. Weiterhin weist die Vorrichtung einen Reinraum auf, innerhalb dessen die Blasformen bzw. die Umformungsstationen transportiert werden, bzw. transportierbar sind wobei dieser Reinraum mittels wenigstens einer Wandung gegenüber einer Umgebung abgetrennt ist. Daneben weist die Vorrichtung auch eine Sterilisationseinrichtung auf, welche innerhalb des Reinraums gelegene Bereiche und/oder Bauteile (bevorzugt Wandungen und/oder Elemente der Umformungsstationen) mit einem fließfähigen Sterilisationsmittel zu deren Sterilisation beaufschlagt. Erfindungsgemäß sind die zu sterilisierenden Bereiche wenigstens teilweise erwärmbar.

Es wird daher vorgeschlagen, dass bestimmte oder mehrere der zu sterilisierenden Bereiche erwärmt werden, um die Sterilisation zu erleichtern. Vorteilhaft erfolgt daher die Erwärmung dieser Bereiche gerade zum Zweck der Sterilisation. Vorteilhaft werden die Bereiche auf wenigstens 50° erwärmt, insbesondere bei der Verwendung von Wasserstoffperoxid (H₂O₂), da diese Temperatur oberhalb des Taupunktes dieser Substanz liegt. Die Verwendung dieser Temperaturen hilft damit, ein Kondensieren des H₂O₂, beispielsweise an den Isolatorwänden und den Einbauten, zu verhindern.

Bei den erwärmten Bereichen kann es sich beispielsweise um Wandungen handeln, welche den Reinraum begrenzen. Daneben kann es sich jedoch auch um andere Bereiche oder Elemente handeln, die sich innerhalb des Reinraums befinden, wie beispielsweise um Blasformen oder deren Elemente, um Blasformträger, um Trägerschalen, um Blasdüsen, um Reckstangen und dergleichen.

Bei einer weiteren vorteilhaften Ausführungsform ist die Sterilisationseinrichtung im Inneren des Reinraums angeordnet. Dabei ist es möglich, dass die Sterilisationseinrichtung beispielsweise als Beaufschlagungseinrichtung, wie beispielsweise als Düse, ausgebildet ist, welche die jeweiligen Bereiche des Reinraums, wie die Innenwandungen oder auch die Formträger mit dem Sterilisationsmittel beaufschlagt. Die Beaufschlagungseinrichtung kann dabei beispielsweise stationär angeordnet sein und insbesondere die gegenüber der Beaufschlagungseinrichtungen beweglichen Teile des Reinraums beaufschlagen. Auch wäre es möglich, dass die Sterilisationseinrichtung beweglich angeordnet ist, um insbesondere die stationär angeordneten Bereiche des Reinraums mit dem Sterilisationsmittel zu beaufschlagen. Bei einer weiteren vorteilhaften Ausführungsform sind im Inneren des Reinraums mehrere derartiger Beaufschlagungseinrichtungen angeordnet, welche gemeinsam die besagte Sterilisationseinrichtung ausbilden. Vorteilhaft ist ein Reservoir vorgesehen, welches die Sterilisationseinrichtung mit Sterilisationsmittel versorgt und besonders bevorzugt ist dieses Reservoir außerhalb des Reinraums angeordnet.

Bei einer weiteren vorteilhaften Ausführungsform sind wenigstens zwei der Wandungen, welche den Reinraum begrenzen, bezüglich einander beweglich. So ist es möglich, dass eine Außenwandung stehend ausgeführt ist und die Innenwandung beispielsweise durch den Träger bzw. das Blasrad gebildet wird und sich bewegt. Zwischen den gegeneinander beweglichen Wänden können dabei Dichtungseinrichtungen, wie beispielsweise Wasserschlösser angeordnet sein.

Insbesondere die Wände, welche zu den Trägern bzw. dem Blasrad gehören, sind dabei vorteilhaft zu erwärmen. Das beruht darauf, dass dieser Träger eine sehr hohe Masse aufweist, und daher eine Erwärmung besonders bedeutsam ist.

Vorteilhaft ist wenigstens eine der den Reinraum begrenzenden Wandungen durch den Träger bzw. einen Bereich des Trägers ausgebildet, beispielsweise kann der Träger eine C-förmige Struktur mit einem oberen und unteren Flansch aufweisen, wobei wenigstens eine dieser Wandungen erwärmt wird. Vorteilhaft sind wenigstens zwei Wandungen des Reinraums und besonders bevorzugt wenigstens drei Wandungen des Reinraums durch den Träger ausgebildet. Bei einer weiteren vorteilhaften Ausführungsform sind sämtliche bewegliche Wandungen des Reinraums durch den Träger ausgebildet. Diese Wandungen können dabei eine umlaufende Ausnehmung ausbilden, in der die jeweiligen Umformungsstationen angeordnet sind.

Bei einer weiteren vorteilhaften Ausführungsform weist die Vorrichtung eine elektrisch betriebene Heizeinrichtung zum Erwärmen der Bereiche auf. So können beispielsweise Heizmatten oder Heizdrähte angeordnet sein, welche Teile der Wandungen, beispielsweise derjenigen Wandungen, welche durch den Träger ausgebildet werden, erwärmen. Insbesondere können derartige Heizeinrichtungen an einer Seite des Blasrades bzw. Trägers angeordnet sein, welche dem Reinraum abgewandt ist. Auf diese Weise wird verhindert, dass die erwärmenden Bauteile selbst in dem Reinraum angeordnet werden müssen. Bei einer weiteren vorteilhaften Ausführungsform weist die Vorrichtung Zuführeinrichtungen auf, um ein erwärmtes Medium, wie beispielsweise heiße Luft, in den Reinraum einzublasen. Dieses Einblasen von erwärmter Luft kann dabei vor dem Sterilisationsvorgang erfolgen. Vorteilhaft handelt es sich bei dem Träger um einen drehbaren Träger, der im Folgenden auch als Blasrad bezeichnet wird.

Problematisch ist im Rahmen der Sterilisation die große Masse dieses Blasrades, die ein schnelles Aufheizen erschwert. Eine entsprechend massive Bauweise des Blasrades ist jedoch vorteilhaft, da es die Formträger zuverlässig und ohne Toleranzen lagern muss und dies insbesondere auch bei Aufbringen eines Blasdrucks von bis zu 40 bar. So ist es beispielsweise möglich, an dem Blasrad (und dort vorteilhaft auf der Seite, die dem Reinraum abgewandt ist) elektrische Heizeinrichtungen, wie Heizmatten, anzubringen. Diese beschleunigen die Erwärmung des Blasrades. Es wäre jedoch auch möglich, eine dampfbetriebene Heizeinrichtung vorzusehen.

Bei einer weiteren vorteilhaften Ausführungsform sind in dem Träger oder an einer der übrigen Wandungen und/oder an Bestandteilen der Umformungsstationen Bohrungen zum Leiten eines Temperiermittels vorgesehen. In diesem Falle kann durch die Bohrungen in dem Träger bzw. Blasrad ein Heizmedium (z. B. Dampf) geleitet werden. Auch hierdurch kann das Aufheizen des Trägers auf die erforderliche Temperatur beschleunigt werden. Vorteilhaft wird sowohl ein Bereich des Trägers erwärmt, als auch erwärmte Luft in den Reinraum eingeführt.

Es sind jedoch auch andere Vorgehensweisen zur Erwärmung denkbar. So könnte zur Erwärmung Primärenergie genutzt werden oder es könnte die Abluft aus einem der Blasmaschine vorgeschalteten Ofen zur Erwärmung genutzt werden. Diese erwärmte Luft aus dem Ofen könnte genutzt werden, um das Blasrad zu dessen Erwärmung von aussen zu beaufschlagen. Daneben könnte die erwärmte Luft auch unter Verwendung der (ohnehin vorhandenen) Lüftungstechnik verwendet werden, um den Reinraum von Innen oder aussen zu erwärmen. Dabei könnten bei einer Zuführung der erwärmten Luft auch Sterilfilter Anwendung finden. Daneben könnte auch eine Kühleinrichtung, welche im Betrieb Bestandteile wie z.B. einen Blasformboden kühlt, vor oder während eines Sterilisationsvorgangs zur Erwärmung dieser Bauteile verwendet werden.

Bei einer weiteren vorteilhaften Ausführungsform weist der Träger einen Grundkörper auf sowie an einer dem Reinraum zugewandten Oberfläche einen in vorbestimmter Position gegenüber dem Grundkörper angeordneten Temperierkörper. Wie oben erwähnt, wird vor der Sterilisation vorteilhaft heiße Luft über die Lüftungstechnik in den Reinraum eingeblasen. Dies soll dafür sorgen, dass alle Bauteile im Isolator auf die erforderliche Temperatur aufgeheizt werden. Da dies, wie erwähnt, bei dem Träger bzw. Blasrad aufgrund dessen massiver Bauweise schwierig ist, wird im Rahmen dieser Ausführungsform vorgeschlagen, das Blasrad in Sandwich-Bauweise zu gestalten.

Dabei kann der Grundkörper bzw. die Grundstruktur weiterhin massiv gebaut sein. Es wird jedoch eine weitere Schicht (d. h. der Temperierkörper) im Inneren, d. h. dort wo sich der Reinraum befindet, hinzugefügt. Dabei kann es sich beispielsweise um eine weitere Blechschicht mit wesentlich geringerer Wandstärke handeln. Vorteilhaft wird zwischen dem Grundkörper und dem Temperierkörper ein Isolationsmedium gebildet bzw. ist ein Isolationsmedium (insbesondere zur thermischen Isolierung) angeordnet. So kann beispielsweise zwischen dem Grundkörper und dem Temperierkörper ein Luftpolster gebildet werden, das isolierend wirkt. Dieses Temperiermedium bzw. die dünne Blechschicht kann relativ schnell erwärmt werden. Vorteilhaft sind daher der Grundkörper und der Temperierkörper zueinander beabstandet.

Anstelle des Luftpolsters könnten jedoch auch eine oder mehrere Schichten aus Isoliermaterial zwischen dem Grundkörper und dem Temperierkörper zum Einsatz kommen. Mit diesem zusätzlichen Temperierkörper ist es nicht mehr notwendig, das gesamte Blasrad aus einem Spezialmaterial, wie beispielsweise Niro zu fertigen. Es kann kostengünstigerer Baustahl verwendet werden. Der Temperierkörper besteht jedoch vorteilhaft aus einem leicht erwärmbaren Material, wie beispielsweise aus Niro.

Bei einer weiteren vorteilhaften Ausführungsform weisen auch die die Blasformen haltenden Formträger Bohrungen zum Leiten eines Temperiermittels und insbesondere zum Leiten eines Temperiermittels zum Erwärmen der Formträger auf. Vorteilhaft weisen die Formträger (bzw. weist die Vorrichtung) auch eine Zuführeinrichtung auf, um diesen Bohrungen ein erwärmtes Temperiermittel zuzuführen. Ein Reservoir für das Temperiermittel ist vorteilhaft außerhalb des Reinraums angeordnet.

Dabei wäre es beispielsweise möglich, die Kühlbohrungen einzusetzen, welche die Blasformen im Produktionsbetrieb kühlen. Diese Kühlbohrungen sind oftmals nach außen hin verschlaucht, verrohrt oder dergleichen, um die Kühlmedien zu- und abführen zu können. Diese Kühlvorrichtung kann im Sterilisationsbetrieb dazu verwendet werden, um die Formträger zu heizen.

Die vorliegende Erfindung ist weiterhin auf ein Verfahren zum Umformen von Kunststoffvorformlingen zu Kunststoffbehältnissen gerichtet, wobei die Kunststoffvorformlinge mit einer Vielzahl von Umformungsstationen, welche an einem beweglichen Träger angeordnet sind, transportiert werden und die Kunststoffvorformlinge in Blasformen angeordnet werden, um dort zu den Kunststoffbehältnissen expandiert zu werden. Dabei werden die Umformungsstationen innerhalb eines Reinraums transportiert, welcher Reinraum mittels wenigstens einer Wandung gegenüber einer Umgebung abgetrennt ist. Weiterhin werden im Sterilisationsbetrieb innerhalb des Reinraums angeordnete Bereiche der Vorrichtung durch eine Sterilisationseinrichtung mit einem fließfähigen Sterilisationsmedium beaufschlagt.

Erfindungsgemäß werden zu sterilisierende Bereiche wenigstens abschnittsweise erwärmt. Vorteilhaft werden dabei die zu sterilisierenden Bereiche zum Zwecke dieser Sterilisation erwärmt. Dieses Erwärmen kann dabei vor und/oder auch während des Sterilisationsvorgangs erfolgen.

Es wird daher auch verfahrensseitig vorgeschlagen, Teile des Reinraums bzw. auch der Umformungsstationen vor der Sterilisation und insbesondere zum Zwecke der Sterilisation zu erwärmen.

Bei dem erfindungsgemäßen Verfahren werden die Bereiche auf eine Temperatur erwärmt, die größer ist als 40° C, bevorzugt größer als 45° C und besonders bevorzugt größer als 50° C.

Bevorzugt werden die Bereiche auf die Temperatur erwärmt, die oberhalb des Taupunktes des jeweils verwendeten Sterilisationsmittels liegt.

Bei einem weiteren vorteilhaften Verfahren erfolgt die Erwärmung elektrisch und/oder durch ein fließfähiges Temperiermedium.

Weitere Vorteile und Ausführungsformen ergeben sich aus den beigefügten Zeichnungen: Darin zeigen:
- Fig. 1: eine schematische Darstellung einer Anlage zum Herstellen von Kunststoffbehältnissen;
- Fig. 2: eine Ansicht eines Reinraums im Bereich einer Umformungsstation;
- Fig. 3: eine Detaildarstellung einer erfindungsgemäßen Vorrichtung in einer ersten Ausführungsform;
- Fig. 4: eine Detaildarstellung der Vorrichtung in einer zweiten Ausführungsform; und
- Fig. 5: eine weitere Detaildarstellung einer erfindungsgemäßen Vorrichtung.

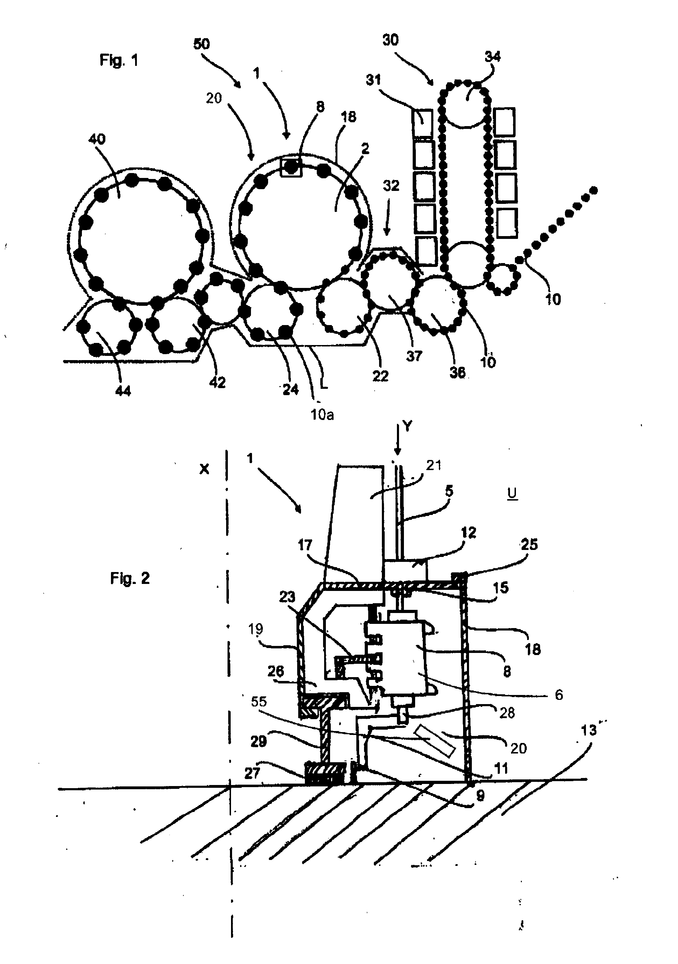

Figur 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische bzw. UV - Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so_verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich eine dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich des Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 10a von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 20 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen o ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen sind innerhalb der Blasformträger 6 angeordnet Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C - förmigen Aussenumfang aufweist, der auch teilweise die Aussenwandungen des Reinraums ausbildet. Damit dreht sich hier diese C - förmige Reinraumwand mit der Transporteinrichtung 2 d.h. dem Blasrad. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Aussenwandung des Reinraums statt. Diese Aussenwandung ist dabei vorteilhaft stationär angeordnet.

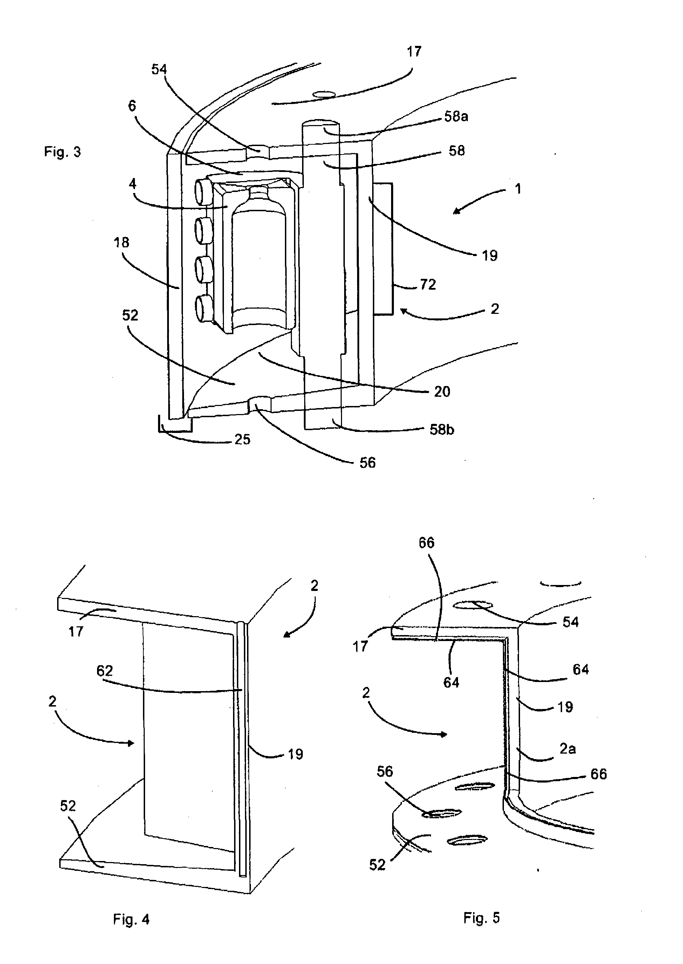

Fig. 3 zeigt eine teilweise Darstellung einer erfindungsgemäßen Vorrichtung 1. Man erkennt hier wiederum den Träger 2, innerhalb dessen ein Reinraum 20 ausgebildet wird, wobei dieser Reinraum 20 kanalartig gestaltet ist. Innerhalb des Trägers ist eine Vielzahl (nur eine gezeigt) von Blasformen 4 angeordnet, die jeweils an Trägern 6 gehaltert sind. Genauer ist in Fig. 3 lediglich ein Blasformteil 4 gezeigt, welches an einem Blasformträgerteil angeordnet ist. Ein entsprechendes zweites Blasformteil und ein entsprechendes Trägerteil sind in Fig. 3 nicht dargestellt. Der Blasformträger 6 ist hier an einer schwenkbaren Welle 58 angeordnet. Die Endabschnitte 58a und 58b dieser Welle ragen hier durch den Deckel 17 bzw. den Boden 52 aus dem Sterilraum 20 heraus. Auf diese Weise ist eine Betätigung der Schwenkwelle 58 von außerhalb, d. h. von außerhalb des Reinraums 20 möglich.

Der Deckel 17 und der Boden 52 sind hier einteilig mit der Wand 19 ausgebildet. Diese drei Wandungen sind jeweils Bestandteil des in der Gesamtheit mit 2 bezeichneten Trägers. Man erkennt, dass die Schwenkwelle 58 an der Wand 17 und 52 angeordnet ist. Aus diesem Grunde müssen diese Wandungen ebenfalls sehr massiv ausgeführt sein. Im Betrieb bewegen sich die Wandungen 17, 19 und 52 und die Außenwand 18 ist dem gegenüber stehend angeordnet. Es wäre denkbar, dass die Außenwand 18 weniger stabil bzw. massiv ausgebildet ist, als die weiteren Wandungen 17, 19 und 52, da diese äußere Wand 18 nicht so hohen Kräften unterworfen ist. Das Bezugszeichen 25 kennzeichnet wieder die Dichtungseinrichtung, um die Bewegung der stehenden Wand 18 gegenüber der beweglichen Wand 52 abzudichten. Eine entsprechende Dichtungseinrichtung kann auch zum Abdichten der stehenden Wand 18 gegenüber dem Deckel 17 vorgesehen sein.

Da, wie erwähnt, die Wandungen 17, 19 und 52 jeweils Bestandteile des Trägers 2 sind und sehr massiv auszubilden sind, wird nunmehr vorgeschlagen, diese Wände zu temperieren bevor die Beaufschlagung mit einem Sterilisationsmedium erfolgt. Dieses Temperieren kann dabei auf unterschiedliche Weise erfolgen. So kann beispielsweise eine Heizeinrichtung 72 an der Innenseite, d. h. der der Drehachse zugewandten (und dem Reinraum 20 abgewandten) Seite der Wand 19 angeordnet sein, um auf diese Weise den Träger bzw. die Wandung 19 zu erwärmen. Entsprechende Erwärmungseinrichtungen könnten auch auf dem Deckel 17 oder unter dem Boden 52 angeordnet sein.

Das Bezugszeichen 54 kennzeichnet eine in dem Deckel angeordnete Öffnung, um beispielsweise eine Reckstange in die jeweiligen Blasformen einzuführen oder um eine Blasdüse an die Kunststoffvorformlinge heranzuführen. Das Bezugszeichen 56 kennzeichnet eine Öffnung in dem Boden 52, um beispielsweise die Blasform 4 auch mit einem Bodenteil (nicht gezeigt) zu versehen, welches an die Blasformteile angelegt oder von diesen entfernt werden kann. Die Antriebe für diese Bodenform und bevorzugt auch für die Reckstange, und/oder eine Blasdüse können sich dabei außerhalb des Reinraums 20 befinden. Weiterhin wäre eine Abdichtung dieser Bauteile, beispielsweise mittels Faltenbälgen und dergleichen möglich.

Fig. 4 zeigt eine Ausgestaltung zur Erreichung einer Erwärmung. Hier sind Bohrungen 62 für ein Temperiermedium in dem Träger 2 bzw. der Seitenwand 19 angeordnet. Durch diese Bohrungen kann ein Temperiermittel zum Temperieren der Wand 19, beispielsweise warmes oder heißes Öl oder auch Wasser, geschickt werden, um auf diese Weise den Träger 2, genauer die Wandungen 19, 17 und 52 zu erwärmen. Entsprechende Temperiermittelbohrungen könnten auch in den Bereichen 17 und 52 angeordnet sein. Auch könnten durchgehende Bohrungen vorgesehen sein, welche sich durch alle drei Wandungen 17, 19 und 52 erstrecken.

Fig. 5 zeigt eine weitere Ausgestaltung einer erfindungsgemäßen Vorrichtung. Hier weist der Träger 2 einen Grundkörper 2a auf und eine Temperiereinrichtung 64, welche beispielsweise als dünne Wand aus Blech ausgebildet sein kann. Zwischen dem Grundkörper 2a und diesem Temperierkörper 64 kann hier ein Luftspalt 66 ausgebildet sein, der eine Isolation zwischen dem Temperierkörper 64 und dem Grundkörper 2a bewirkt. In diesem Bereich bzw. Spalt 66 kann beispielsweise Luft angeordnet sein oder auch ein weiteres Isolationsmittel. Auf diese Weise ist es möglich, den Temperierkörper 64 relativ kurz mit Wärme zu beaufschlagen, beispielsweise mit heißem Dampf, ohne dass dabei auch der Grundkörper 2a mit erwärmt werden muss. Man erkennt, dass sich der Temperierkörper 64 auch unterhalb des Deckels 17 erstreckt und auch hier ein entsprechender Spalt 66 ausgebildet ist. Auch wäre es möglich, den Temperierkörper auch im Bereich des Bodens 52 anzuordnen und dabei auch hier wieder einen entsprechenden Isolierraum 66 vorzusehen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Träger
- 2a: Grundkörper
- 4: Blasform
- 6: Blasformträger
- 9: Führungskurve
- 10: Kunststoffvorformlinge
- 10a: Behältnis
- 11: Folgeeinrichtung
- 12: Schlitten
- 13: Boden
- 17: Deckel
- 18: Wandung
- 19: Seitenwand, Abschnitt
- 20: Reinraum
- 22: Zuführeinrichtung
- 23: Halteeinrichtung
- 24: Abführeinrichtung
- 25: Dichtungseinrichtung
- 26: Träger
- 27: Dichtungseinrichtung
- 28: Träger (für Bodenform)
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anordnung
- 52: Boden, Wand
- 54, 56: Öffnung
- 55: Sterilisationseinrichtung
- 58: Welle
- 58a, 58b: Endabschnitte
- 62: Bohrungen
- 64: Temperiereinrichtung
- 66: Spalt, Isolierraum
- 72: Heizeinrichtung
- X: Achse
- Y: Richtung
- U: Umgebung

## Patentansprüche

1. Vorrichtung zum Umformen von Kunststoffvorformlingen (10) zu Kunststoffbehältnissen (10a), mit einer Vielzahl von Umformungsstationen (8), welche an einem beweglichen Träger (2) angeordnet sind, wobei die Umformungsstationen (8) jeweils in Blasformträgern (6) angeordnete Blasformen (4) aufweisen, welche zur Aufnahme der Kunststoffvorformlinge (10) dienen und innerhalb derer die Kunststoffvorformlinge (10) zu den Kunststoffbehältnissen (10a) umformbar sind, mit einem Reinraum (20), innerhalb dessen die Umformungsstationen (8) transportiert werden, wobei dieser Reinraum (20) mittels wenigstens einer Wandung (17,18,19) gegenüber der Umgebung (U) abgetrennt ist und mit einer Sterilisationseinrichtung (55), welche innerhalb des Reinraums (20) gelegene Bereiche (6, 17,18,19) mit einem fließfähigen Sterilisationsmittel zu deren Sterilisation beaufschlagt
**dadurch gekennzeichnet, dass**
die zu sterilisierenden Bereiche (6, 17, 18, 19) wenigstens teilweise durch eine Heizeinrichtung (30, 72) erwärmbar sind, wobei eine Wand, die zu dem Träger gehört, auf eine Temperatur erwärmbar ist, die größer ist als 40°C.

2. Vorrichtung nach Anspruch 1,
**dadurch gekennzeichnet, dass**
wenigstens eine den Reinraum (20) begrenzende Wand (17, 19) durch einen Bereich des Trägers (2) ausgebildet ist.

3. Vorrichtung nach Anspruch 1,
**dadurch gekennzeichnet, dass**
die Vorrichtung (1) eine elektrisch betriebene Heizeinrichtung (72) zum Erwärmen der Bereiche aufweist.

4. Vorrichtung nach wenigstens einem der vorangegangenen Ansprüche,
**dadurch gekennzeichnet, dass**
in dem Träger (2) Bohrungen (62) zum Leiten eines Temperiermittels vorgesehen sind.

5. Vorrichtung (1) nach wenigstens einem der vorangegangenen Ansprüche,
**dadurch gekennzeichnet, dass**
der Träger (2) einen Grundkörper (2a) aufweist sowie an einer dem Reinraum (20) zugewandten Oberfläche (2b) einen in vorbestimmter Position gegenüber dem Grundkörper (2a) angeordneten Temperierkörper (64).

6. Vorrichtung (1) nach Anspruch 5,
**dadurch gekennzeichnet, dass**
zwischen dem Grundkörper (2a) und dem Temperierkörper (64) ein Isolationsmedium angeordnet ist.

7. Vorrichtung (1) nach wenigstens einem, der vorangegangenen Ansprüche,
**dadurch gekennzeichnet, dass**
die Formträger (6) Bohrungen zum Leiten eines Temperiermittels zum Erwärmen der Formträger (6) aufweisen sowie eine Zuführeinrichtung, um den Bohrungen ein erwärmtes Temperiermittel zuzuführen.

8. Verfahren zum Umformen von Kunststoffvorformlingen (10) zu Kunststoffbehältnissen (10a), wobei die Kunststoffvorformlinge (10) einer Vielzahl von Umformungsstationen (8), welche an einem beweglichen Träger (2) angeordnet sind, transportiert werden und die Kunststoffvorformlinge (10) in Blasformen (4) angeordnet werden um dort zu den Kunststoffbehältnissen (10a) expandiert zu werden, wobei die Umformungsstationen (8) innerhalb eines Reinraums (20) transportiert werden, welcher Reinraum (20) mittels wenigstens einer Wandung (17, 18, 19) gegenüber einer Umgebung abgetrennt ist, und wobei in einem Sterilisationsbetrieb innerhalb des Reinraums (20) angeordnete Bereiche (17, 18, 19, 6) der Vorrichtung (1) durch eine Sterilisationseinrichtung (55) mit einem fließfähigen Sterilisationsmedium beaufschlagt werden,
**dadurch gekennzeichnet, dass**
zu sterilisierende Bereiche (6, 17, 18, 19) wenigstens abschnittsweise erwärmt werden und eine Wand, die zu dem Träger gehört, auf eine Temperatur erwärmt wird, die größer ist als 40°C.

9. Verfahren nach Anspruch 8,
**dadurch gekennzeichnet, dass**
die Bereiche auf eine Temperatur erwärmt werden, die bevorzugt größer ist als 45°C und besonders bevorzugt größer als 50°C

10. Verfahren nach Anspruch 8,
**dadurch gekennzeichnet, dass**
die Erwärmung elektrisch und/oder durch ein fließfähiges Temperiermedium erfolgt.

## Claims

1. Apparatus for shaping plastics material preforms (10) into plastics material containers (10a), with a plurality of shaping stations (8) which are arranged on a movable carrier (2), wherein the shaping stations (8) each have blowing moulds (4) which are arranged in blowing mould carriers (6) which serve to accommodate the plastics material preforms (10) and within which the plastics material preforms (10) can be shaped into the plastics material containers (10a), with a clean room (20), within which the shaping stations (8) are conveyed, wherein this clean room (20) is separated from the surroundings (U) by means of at least one wall (17, 18, 19), and with a sterilization device (55) which acts upon regions (6, 17, 18, 19) lying within the clean room (20) with a flowable sterilization agent for sterilization thereof
wherein**characterized in that**
the regions (6, 17, 18, 19) to be sterilized can be heated by a heating device (30, 72) at least in part, wherein a wall which belongs to the carrier can be heated to a temperature greater than 40°C.

2. Apparatus according to claim 1,
wherein**characterized in that**
at least one wall (17, 19) forming the boundary of the clean room (20) is formed by a region of the carrier (2).

3. Apparatus according to claim 1,
wherein**characterized in that**
the apparatus (1) has an electrically operated heating device (72) for heating the regions.

4. Apparatus according to at least one of the preceding claims,
wherein**characterized in that**
bores (62) for carrying a temperature control medium are provided in the carrier (2).

5. Apparatus (1) according to at least one of the preceding claims,
**characterized in that**
the carrier (2) has a base body (2a) and, on a surface (2b) facing the clean room (20), a temperature control body (64) arranged in a predetermined position with respect to the base body (2a).

6. Apparatus (1) according to claim 5,
**characterized in that**
an insulating medium is arranged between the base body (2a) and the temperature control body (64).

7. Apparatus (1) according to at least one of the preceding claims,
**characterized in that**
the mould carriers (6) have bores for carrying a temperature control medium for heating the mould carriers (6) and a feed device in order to feed a heated temperature control medium to the bores.

8. Process for shaping plastics material preforms (10) into plastics material containers (10a), wherein the plastics material preforms (10) are conveyed with a plurality of shaping stations (8), which are arranged on a movable carrier (2), and the plastics material preforms (10) are arranged in blowing moulds (4) in order to be expanded there into the plastics material containers (10a), wherein the shaping stations (8) are conveyed within a clean room (20), which clean room (20) is separated off from the surroundings by means of at least one wall (17, 18, 19), and wherein during a sterilization operation regions (17, 18, 19, 6) of the apparatus (1) which are arranged within the clean room (20) are acted upon with a flowable sterilization medium by a sterilization device (55),
**characterized in that**
regions (6, 17, 18, 19) to be sterilized are heated at least in sections and that the wall which belongs to the carrier is heated to a temperature greater than 40°C..

9. Process according to claim 8,
**characterized in that**
the regions are heated to a temperature which preferably is greater than 45 °C and particularly preferably greater than 50 °C.

10. Process according to claim 8,
**characterized in that**
the heating is carried out electrically and/or by a flowable temperature control medium.

## Revendications

1. Installation de transformation de préformes en matière plastique (10) en récipients en matière plastique (10a), avec une pluralité de stations de transformation (8) disposées sur un support (2) mobile, lesdites stations de déformation (8) comportant des moules de soufflage (4) disposés dans des supports de moule (6) respectifs, prévus pour recevoir les préformes en matière plastique (10) et à l'intérieur desquels les préformes en matière plastique (10) sont transformables en récipients en matière plastique (10a), avec un compartiment stérile (20) à l'intérieur duquel les stations de transformation (8) sont transportées, ledit compartiment stérile (20) étant isolé de l'environnement (U) par au moins une paroi (17, 18, 19), et avec un dispositif de stérilisation (55) qui soumet des zones (6, 17, 18, 19) situées à l'intérieur du compartiment stérile (20) à un agent de stérilisation fluide afin de les stériliser,
**caractérisée en ce que**
les zones (6, 17, 18, 19) à stériliser peuvent être au moins partiellement chauffées par un dispositif de chauffage (30, 72), une paroi appartenant au support pouvant être chauffée à une température supérieure à 40 °C.

2. Installation selon la revendication 1,
**caractérisée en ce qu'**
au moins une paroi (17, 19) délimitant le compartiment stérile (20) est réalisée par une partie du support (2).

3. Installation selon la revendication 1,
**caractérisée en ce que**
ladite installation (1) comporte un dispositif de chauffage (72) électrique pour le chauffage des zones.

4. Installation selon au moins une des revendications précédentes,
**caractérisée en ce que**
des alésages (62) sont prévus dans le support (2) pour la conduction d'un agent régulateur de température.

5. Installation (1) selon au moins une des revendications précédentes,
**caractérisée en ce que**
le support (2) présente un corps de base (2a) ainsi qu'un corps de régulation de température (64) disposé sur une surface (2b) opposée au compartiment stérile (20), en position prédéfinie par rapport au corps de base (2a).

6. Installation (1) selon la revendication 5,
**caractérisée en ce qu'**
un milieu isolant est disposé entre le corps de base (2a) et le corps de régulation de température (64).

7. Installation (1) selon au moins une des revendications précédentes,
**caractérisée en ce que**
les supports de moule (6) présentent des alésages pour la conduction d'un agent régulateur de température pour le chauffage des supports de moule (6) ainsi qu'un dispositif d'alimentation pour l'amenée d'un agent régulateur de température chauffé vers les alésages.

8. Procédé de transformation de préformes en matière plastique (10) en récipients en matière plastique (10a), lesdites préformes en matière plastique (10) étant transportées vers une pluralité de stations de transformation (8) disposées sur un support (2) mobile, et les préformes en matière plastique (10) étant disposées dans des moules de soufflage (4) pour y être gonflées pour former les récipients en matière plastique (10a), les stations de déformation (8) étant transportées à l'intérieur d'un compartiment stérile (20), ledit compartiment stérile (20) étant isolé d'un environnement par au moins une paroi (17, 18, 19), et des zones (17, 18, 19, 6) de l'installation (1) étant soumises à un agent de stérilisation fluide par un dispositif de stérilisation (55) lors d'un mode de service de stérilisation à l'intérieur du compartiment stérile (20),
**caractérisé en ce que**
les zones (6, 17, 18, 19) à stériliser sont chauffées au moins en sections et **en ce qu'**une paroi appartenant au support est chauffée à une température supérieure à 40 °C.

9. Procédé selon la revendication 8,
**caractérisé en ce que**
les zones sont chauffées à une température préférentiellement supérieure à 45 °C, et plus particulièrement préférentiellement supérieure à 50 °C.

10. Procédé selon la revendication 8,
**caractérisé en ce que**
le chauffage est obtenu de manière électrique et/ou au moyen d'un agent de régulation de température fluide.
